# EUROPEAN PATENT SPECIFICATION

(11) **EP 0 633 390 B1**
(45) Date of publication and mention of the grant of the patent: **15.09.1999**
(21) Application number: 94304841.3
(22) Date of filing: 01.07.1994
(51) Int. Cl.: E21B 33/13, C04B 24/26, C04B 24/16

(54) **Set retarding cement additive**
Abbinderverzögernder Zementzusatz
Additif retardeur de prise pour ciment

(30) Priority: 01.07.1993 US 86403
(43) Date of publication of application: 11.01.1995
(73) Proprietor: HALLIBURTON ENERGY SERVICES, INC., Duncan Oklahoma 73536 (US)
(72) Inventor: Rodrigues, Klein A., Lafayette, Indiana 47905 (US)
(74) Representative: Wain, Christopher Paul

(56) References cited:
- WO-A-91/16522
- US-A- 4 015 991
- US-A- 4 610 306
- US-A- 4 674 574
- US-A- 4 941 536

## Description

The present invention broadly relates to hydraulic cement compositions and methods of their use, and more specifically, to additives for retarding the set of hydraulic cement compositions.

In the construction and repair of wells, such as oil, gas and water wells, various operations featuring the use of hydraulic cement compositions are performed. For example, in the completion of a well comprised of a well bore which penetrates one or more subterranean formations, a pipe, such as casing, is disposed in the well bore and a hydraulic cement composition is placed in the annular space between the walls of the well bore and the exterior of the pipe. The cement composition is permitted to set in the annular space whereby a cement sheath is formed therein which bonds the pipe to the walls of the well bore and prevents the undesirable flow of fluids into and through the annular space. Formation of the cement sheath is referred to herein as primary cementing.

In repairing wells, hydraulic cement compositions are often utilized to plug holes or cracks in pipe disposed in the well bore; to plug holes, cracks, voids or channels in the aforementioned cement sheath; and to plug permeable zones or fractures in subterranean formations. Such holes, cracks, voids, channels, and permeable zones are plugged by squeezing hydraulic cement compositions therein which harden and form impermeable plugs. The above procedures are referred to herein as remedial cementing.

A number of additives have been hitherto employed in prior art cementing compositions, such as dispersants, fluid loss additives or the like. For example, WO-A-91 16522 discloses dispersants suitable for use in cement slurries and mixtures of drilling fluids and cement slurries. The dispersants can be selected from the following - hydroxypropyl acrylate-acrylic acid copolymer; sulfonated vinyl toluene - maleic anhydride copolymer; sulfonated vinyl toluene - maleic acid copolymer; sulfonated methyl polyacrylamide; sulfonated ethyl polyacrylamide; sulfonated phenyl polyacrylamide; a copolymer of ethylenic acids, acrylamides and ethylenic esters of phosphonic acid; acrylic acid polymers; acrylamide polymers; sulfonated copolymers of acrylic acid and acrylamide; phosphonated copolymers of acrylic acid and acrylamide; and sulfonated and phosphonated copolymers of acrylic acid and acrylamide.

US-A-4674574 discloses a cementing composition comprising water, hydraulic cement and a water dispersible fluid loss additive. The fluid loss additive comprises a terpolymer of a vinyl containing alkyl or aromatic sulfonate, a nonionic monomer and an unsaturated polybasic acid. The sulphonate is selected from 2-acrylamido-2 methylpropane sulfonic acid, sodium vinyl sulfonate and vinyl benzene sulfonate. The non-ionic monomer selected from acrylamide, N,N-dimethlacrylamide, N-vinyl pyrrolidone, N-vinyl acetamide and dimethylamino ethyl methacrylate. The polybasic acid is selected from itaconic acid, maleic acid, fumaric acid, citraconic acid, mesaconic acid, glutaconic acid, aconitric acid, ∝,∝'-dimethylmesaconic acid and 1-butene 2,3,4-tricarboxylic acid.

US-A 4610306 discloses a cement composition comprising water, hydraulic cement and a fluid loss additive. The fluid loss additive comprises a copolymer of a first monomer of dimethyldiallyl ammonium chloride and a second anionic monomer having a carboxylate or sulfonate functionality.

High temperatures are frequently encountered in deep subterranean zones. When cementing such zones, the combination of the depth of the zone and high temperatures encountered often results in the requirement that the setting time of the cement composition be extended. That is, the thickening and setting of the cement composition must be retarded or delayed for a time sufficient to permit the cement composition to be pumped into the zone to be cemented. Set retarding additives have been developed and used for this purpose, and such additives have been mixed with well cement compositions in amounts sufficient to delay the setting of the compositions to enable them to be pumped into desired subterranean locations.

While a variety of set retarding additives have been developed and used successfully, they can, and often do, produce erratic results in cement compositions of varying content and/or cause premature gelation of the cement compositions when they are subjected to high temperatures such as those encountered in deep subterranean zones. The high temperatures referred to herein are temperatures up to 250°F (121°C) and as high as 500°F (260°C) and beyond. Gelation, as used herein, means an increase in viscosity of a cement composition without an increase in compressive strength. Such gelation renders the cement compositions difficult or impossible to pump even though the cement composition has not set. In addition, a number of prior art set retarding additives are synthetic polymers which are difficult to produce. Thus, there is a continuing need for improved cement set retarding additives which do not cause premature gelation and which are relatively easy to produce. There is a need for set retarded hydraulic cement compositions containing such additives and methods of using the compositions for conducting cementing operations in wells.

The present invention provides improved set retarding additives, improved set retarded hydraulic cement compositions and improved methods of using the compositions which meet the needs described above and overcome the shortcomings of the prior art.

In particular, it is an object of the present invention to provide improved set retarding additives, improved set retarded cement compositions, and improved methods of using the set retarded cement compositions in primary and in remedial cementing operations.

Other and further features, objects and advantages of the present invention will readily suggest themselves to those skilled in the art upon a reading of the following description of preferred embodiments.

The set retarding additives of this invention are copolymers and terpolymers, which, for convenience are referred to herein as polymers. The copolymers are formed from first and second monomer forming compounds, which are different compounds and the terpolymers are formed from first, second and third monomer forming compounds which are different compounds.

More particularly, there is provided by the present invention use of an additive for retarding the set of a hydraulic cement composition, wherein said additive comprises a polymer, which is either a copolymer or a terpolymer; wherein said copolymer comprises monomer units formed from a first monomer-forming compound and a second monomer-forming compound, wherein said first and second monomer-forming compounds are different and are present in said polymer in amounts of from 5 to 50 and 95 to 50 mole percent of said polymer respectively, and wherein said first monomer-forming compound is a compound of the structural formula: 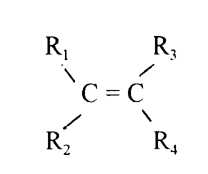 wherein R₁ is H or CH₃; R₂ is H or COOH; R₃ is H or COOH; and R₄ is H, COOH or CH₂COOH; provided that when R₁ is H and R₂ is COOH, R₃ and R₄ are different and are either H or COOH; when R₁ and R₂ are both H, R₃ is COOH and R₄ is CH₂COOH; and when R₁ is CH₃, R₂, is COOH and R₃ and R₄ are different and are either H or COOH; and said second monomer forming compound is 2-acrylamido-2-methylpropane sulfonic acid, sodium methallyl sulfonate, sodium p-vinyl benzene sulfonate, acrylamide, N,N-dimethylacrylamide, vinyl sulfonic acid, acrylonitrile, 1-vinyl-2-pyrrolidone, vinyl phosphonic acid, diallyldimethylammonium chloride, diethylaminoethyl methacrylate, dimethylaminoethyl acrylate methyl chloride, methacrylamido propyltrimethyl ammonium chloride, N,N-dimethylaminoethyl methacrylate, or 2-triethylammoniummethyl methacrylate chloride; wherein said terpolymer comprises monomer units formed from a first monomer-forming compound, a second monomer-forming compound and a third monomer-forming compound, wherein said first monomer-forming compound is present in said polymer in amounts of from 5 to 50 mole percent of said polymer and is as defined above, said second monomer-forming compound is present in said polymer in amounts of from 90 to 45 mole percent of said polymer and is as defined above, and said third monomer-forming compound is present in said polymer in amounts of from 5 to 50 mole percent of said polymer and is maleic acid, acrylic acid or any of said second monomer-forming compounds.

There is also provided by the present invention an additive for retarding the set of a hydraulic cement composition, said additive comprising a polymer which is either a copolymer or a terpolymer; wherein said copolymer comprises monomer units formed from a first monomer-forming compound and a second monomer-forming compound, wherein said first and second monomer-forming compounds are different and are present in said polymer in amounts of from 5 to 50 and 95 to 50 mole percent of said polymer respectively, and wherein said first monomer-forming compound is a compound of the structural formula 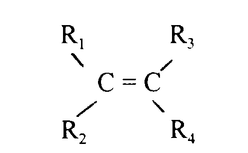 wherein R₁ is H or CH₃; R₂ is H or COOH; R₃ is H or COOH; and R₄ is H, COOH or CH₂COOH; provided that when R₁ is H and R₂ is COOH, R₃ and R₄ are different and are either H or COOH; when R₁ and R₂ are both H, R₃ is COOH and R₄ is CH₂COOH; and when R₁ is CH₃, R₂ is COOH and R₃ and R₄ are different and are either H or COOH; and said second monomer forming compound is 2-acrylamido-2-methylpropane sulfonic acid, sodium methallyl sulfonate, sodium p-vinyl benzene sulfonate, acrylamide, N,N-dimethylacrylamide, vinyl sulfonic acid, acrylonitrile, 1-vinyl-2-pyrrolidone, vinyl phosphonic acid, diallyldimethylammonium chloride, diethylaminoethyl methacrylate, dimethylaminoethyl acrylate methyl chloride, methacrylamido propyltrimethyl ammonium chloride, N,N-dimethylaminoethyl methacrylate, or 2-triethylammoniummethyl methacrylate chloride; wherein said terpolymer comprises monomer units formed from a first monomer-forming compound, a second monomer-forming compound and a third monomer-forming compound, wherein said first monomer-forming compound is present in said polymer in amounts of from 5 to 50 mole percent of said polymer and is as defined above, said second monomer-forming compound is present in said polymer in amounts of from 90 to 45 mole percent of said polymer and is selected from 2-acrylamido-2-methylpropane sulfonic acid and sodium methallyl sulfonate, and said third monomer-forming compound is present in said polymer in amounts of from 5 to 50 mole percent of said polymer and is selected from acrylic acid and maleic acid when the first monomer-forming compound is not maleic acid; with the proviso that when said second monomer-forming compound of said copolymer is 2-acrylamido-2-methylpropane sulfonic acid, said first monomer-forming compound is not itaconic acid.

The third monomer-forming compound is preferably acrylic acid. It is emphasized that in any given polymer of this invention, the compounds employed to produce the copolymer or terpolymer are different compounds.

Set retarded hydraulic cement compositions including the additives of this invention and methods of using the cement compositions are also provided.

Examples of the first monomer-forming compounds within the scope of the above formula are maleic acid, itaconic acid, fumaric acid, citraconic acid, mesaconic acid and similar acids.

Maleic acid is represented by the above formula when R₁ and R₃ are hydrogen and R₂ and R₄ are carboxyl groups (COOH). In itaconic acid, R₁ and R₂ are hydrogen, R₃ is a carboxyl group and R₄ is a methylcarboxyl group (CH₂COOH). In fumaric acid, R₃ and R₄ are hydrogen and R₂ and R₃ are carboxyl groups. In citraconic acid, R₁ is a methyl group, R₃ is hydrogen and R₂ and R₄ are carboxyl groups. In mesaconic acid, R₁ is a methyl group, R₄ is hydrogen and R₂ and R₃ are carboxyl groups. When acids within the scope of the above structure are polymerized, they form monomer units in the produced polymer having the structure:

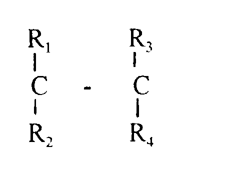

When the second monomer forming compound is acrylamide, the polymer can be modified by reacting the acrylamide groups of the polymer with formaldehyde and sodium sulfite to thereby sulfomethylate a part of the polymer. During the sulfomethylation reaction, a part of the unsulfomethylated acrylamide groups may be hydrolyzed to carboxylic groups, which aid in the retardation properties of the copolymer. The sulfomethylation of some of the acrylamide groups in the polymer renders them resistant to hydrolysis when the polymer is added to a hydraulic cement composition whereby they contribute to the compressive strength development of the cement.

Of the second monomer forming compounds, 2-acrylamido-2-methylpropane sulfonic acid and sodium methallyl sulfonate are preferred for use as second monomers. The second monomer units formed from 2-acrylamido-2-methylpropane sulfonic acid have the following structure: 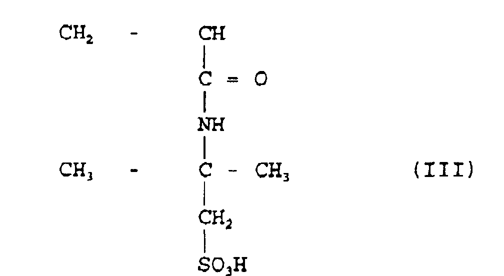 The second monomer units formed from sodium methallyl sulfonate have the following structure:

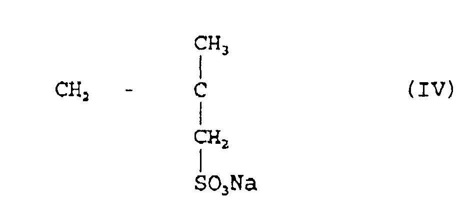

When the polymer additive of this invention is a copolymer, the first monomer units are preferably formed from one of maleic acid and itaconic acid. The second monomer unit is preferably formed from 2-acrylamido-2-methylpropane sulfonic acid.

The copolymers generally include monomer units formed from the first monomer unit in an amount in the range of from 5 mole percent to 50 mole percent with the remainder comprising monomer units formed from the second monomer unit. More preferably, first monomer units are present in the copolymer in an amount in the range of from 30 mole percent to 50 mole percent with the remainder comprising second monomer units. The most preferred copolymer set retarding additive of this invention consists essentially of monomer units formed from maleic acid and 2-acrylamido, 2-methylpropane sulfonic acid in a mole ratio, respectively, of 43.4 to 56.6.

The first, second and third monomer forming compounds must be different in order to form copolymers and terpolymers having two or three different monomer units therein, respectively. Of the third monomer forming compounds that can be used to produce the terpolymers, maleic acid, acrylic acid and acrylamide are preferred with acrylic acid being the most preferred. The monomer units formed from acrylic acid and acrylamide have the following structural formulas, respectively: 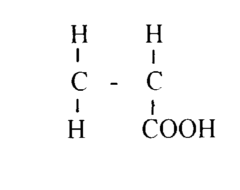 and

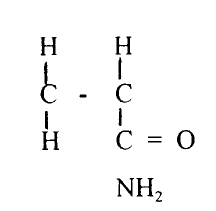

When the terpolymers contain acrylamide, they can be sulfomethylated using formaldehyde and sodium sulfite as described above.

Preferred terpolymer set retarding additives of this invention are terpolymers consisting essentially of monomer units formed from a first compound selected from one of maleic acid and the other first monomer forming compound described above, monomer units formed from a second compound selected from one of 2-acrylamido-2-methylpropane sulfonic acid and sodium methallyl sulfonate, and monomer units formed from a third monomer forming compound selected from one of acrylic acid and maleic acid when the first monomer forming compound is not maleic acid. A particularly preferred terpolymer consists essentially of monomer units formed from maleic acid. 2-acrylamido, 2-methylpropane sulfonic acid and acrylic acid in a mole ratio, respectively, of 33.0 to 36.5 to 30.4. The most preferred terpolymer consists of monomer units formed from itaconic acid, 2-acrylamido, 2-methylpropane sulfonic acid and maleic acid in a mole ratio, respectively, of about 24.5 to 67.0 to 8.5.

To make the above described polymers, the monomers can be polymerized in an aqueous solution using sodium persulfate and tetraethylenepentamine as an initiating system. In a typical synthesis, all the compounds to be polymerized are dissolved in deionized water and the solution (i.e., the reaction mixture) is maintained in a water bath at 60°C. Nitrogen is bubbled through the reaction mixture for a minimum time of 30 minutes to eliminate any dissolved oxygen and then small quantities of sodium persulfate and tetraethylenepentamine are added to the reaction mixture. The reaction is allowed to proceed for about 4 hours. The aqueous solution containing produced polymer can be utilized directly as a liquid cement composition set retarding additive.

The set retarded hydraulic cement compositions of this invention are comprised of a hydraulic cement, sufficient water to form a slurry of the cement and the polymer set retarding additive described above. While various hydraulic cements can be utilized in the cement compositions, Portland cement is generally preferred, and can be, for example, one or more of the various types identified as API Classes A - H and J cements. These cements are classified and defined in *API Specification For Materials and Testing for Well Cements,* API Specification 10A, 21st Edition dated September 1, 1991, of the American Petroleum Institute, Washington, D.C. API Portland cements generally have a maximum particle size of about 90 micrometers and a specific surface (sometimes referred to as Blaine Fineness) of about 3900 square centimetres per gram. A useful and effective cement slurry for use in accordance with this invention comprises API Class H Portland cement mixed with water to provide a density of from 11.3 to 18.0 pounds per gallon (1354 to 2157 kg/m³).

It is often advantageous to use a small particle size hydraulic cement consisting of particles having diameters no larger than about 30 micrometers and having a Blaine Fineness of no less than about 6000 square centimetres per gram. Preferably, the cement particles have diameters no larger than about 17 micrometers and most preferably no larger than about 11 micrometers. The Blaine Fineness is preferably greater than about 7000 square centimeters per gram, more preferably greater than about 10,000 square centimeters per gram and still more preferably greater than about 13,000 square centimeters per gram. Methods of utilizing such small particle size hydraulic cement in primary and remedial cementing are disclosed in US-A-5,121,795 issued June 16, 1992 and US-A-5,125,455 issued June 30, 1992.

The water used in the cement compositions can be water from any source, provided that the water does not contain an excess of compounds which adversely react with or otherwise affect other components in the cement compositions. The water is present in the cement composition of this invention in an amount sufficient to form a slurry of the cement, preferably, a slurry which is readily pumpable. The expression pumpable as used herein means, generally, the water is present in the range of from 30 percent to 60 percent by weight of dry cement in the composition when the cement is of normal particle size. When a cement of small particle size as described above is used, water is present in the cement composition in an amount in the range of from 100 percent to 200 percent by weight of dry cement in the composition. A dispersing agent, such as the dispersing agent described in US-A-4,557,763 issued on December 10, 1985, is generally included to facilitate the formation of the cement slurry and prevent the premature gelation thereof.

When cement compositions are utilized to conduct primary, remedial and other cementing operations in subterranean zones penetrated by well bores, the compositions must remain pumpable for a sufficient period of time to permit the placement of them in the subterranean zones to be cemented. The set retarding additive described above is, accordingly, included in the cement composition of this invention in an amount sufficient to delay or retard the setting of the composition for the time period required to place the composition in a desired location. The thickening and set times of cement compositions are strongly dependent upon temperature and pressure, and to obtain satisfactory results in well cementing applications, a quantity of the polymer set retarding additive of this invention required to provide the necessary pumping time at the temperature and pressure to be encountered is included in the cement composition to be utilized. Such quantity can be determined in advance by performing thickening time tests of the type described in the above mentioned API Specification 10. Generally, an aqueous solution of one of the above described set retarding polymer additives which contains about 25 percent polymer by weight of solution, i.e., 25% active, is combined with a cement slurry in an amount whereby the active polymer is present in the resulting set retarded cement composition in an amount in the range of from 0.1% to 6% by weight of dry cement in the composition.

A variety of other additives can be included in the well cement compositions of this invention in addition to the polymer set retarding additives disclosed herein. Such other additives are well known to those skilled in the art and can be included in well cement compositions to vary the density and compressive strength, and to control fluid loss, reduce viscosity, increase resistance to corrosive fluids, and the like. Essentially, a cement composition meeting the specifications of the American Petroleum Institute is mixed with water and other additives to provide a cement slurry appropriate for the conditions existing in each individual well to be cemented.

A particularly preferred set retarded cement composition of this invention is comprised of hydraulic cement, water in an amount in the range of from 30 percent to 60 percent by weight of dry cement in the composition and active copolymer set retarding additive present in the composition in an amount in the range of from 0.1 percent to 6.0 percent by weight of dry cement therein. The set retarding additive employed in the cement composition is substantially as herein before described.

The methods of this invention for cementing a subterranean zone penetrated by a well bore are comprised of the steps of forming a pumpable, set retarded cement composition of this invention, pumping the cement composition into the subterranean zone by way of the well bore, and then allowing the cement composition to set therein.

The following examples are provided in order to further describe the additives, compositions and methods of this invention and to facilitate a clear understanding thereof.

### Example 1

Maleic acid and 2-acrylamido-2-methylpropane sulfonic acid were copolymerized in an aqueous solution using sodium persulfate and tetraethylenepentamine as the initiating system. In this regard, 3 grams of maleic acid and 7 grams of 2-acrylamido-2-methylpropane sulfonic acid were dissolved in 100 gram of deionized water. The resulting solution (reaction mixture) was placed in a water bath maintained at 60°C. Nitrogen was bubbled through the reaction mixture for 30 minutes to eliminate any dissolved oxygen and then 0.2 grams of sodium persulfate and 0.25 millilitres of tetraethylenepentamine were added to the reaction mixture and the reaction was allowed to proceed for about 4 hours. The resulting reaction product mixture was an aqueous solution of a copolymer comprised of monomer units formed from maleic acid and 2-acrylamido-2-methylpropane sulfonic acid in a mole ratio, respectively, of 43.4 to 56.6. It is believed that the solution contained about 9% by weight of the described copolymer.

### Example 2

Various quantities of the set retarding polymer additive produced as described in Example 1 above were added to test portions of a base cement slurry. The base cement slurry was comprised of Lone Star Class H hydraulic cement and water in an amount of 38 percent by weight of dry cement. The base slurry had a density of 16.4 pounds per gallon (1965 kg/m³). The cement composition samples were tested at temperatures above 200°F (93°C) and therefore also contained silica flour in an amount of 35 percent by weight of dry cement to prevent the loss of set cement compressive strength over time at high temperatures.

The test cement composition samples, containing various quantities of the set retarding additive, were tested for thickening times at various temperatures in accordance with the standard API thickening time testing procedures set forth in the API Specification 10 referred to above. The results of these tests are set forth in Table I below.

**TABLE I**

| Thickening Times of Set Retarded Cement Compositions | | | | | | |
|---|---|---|---|---|---|---|
| Amount of Set Retarding Additive in Cement Composition¹, % by Weight of Dry Cement | Thickening Times, hr:min | | | | | |
| | 145°F | 170°F | 200°F | 250°F | 275°F | 300°F |
| | (63°C) | (77°C) | (93°C) | (121°C) | (135°C) | (149°C ) |
| 0.2 | 2:50 | 2:50 | 2:20 | - | - | - |
| 0.3 | 6:04 | 5:25 | 4:55 | - | - | - |
| 0.4 | 6:09 | 7:50 | 7:06 | - | - | - |
| 0.5 | 8:56 | 11:00 | 10:39 | 2:58 | - | - |
| 0.75 | - | - | - | 4:50 | 2:23 | - |
| 1.0 | - | - | - | 7:04 | 2:44 | 1:45 |
| 1.5 | - | - | - | - | 3:15 | 2:05 |

| | | | | | | |
|---|---|---|---|---|---|---|
| ¹Lonestar Class H cement, 38% water by weight of dry cement and set retarding additive (16.4 Ib/gal) (1965 kg/m³). Silica flour was included in the test compositions in tests over 200°F (93°C) in amounts of 35% by weight of dry cement. | | | | | | |

From Table I it can be seen that the set retarding copolymer additive of this invention produced excellent thickening times at small concentrations at temperatures up to and including 300°F (149°C). Also, the thickening time increased as the concentration of the additive was increased.

It should be noted that the quantity of additive disclosed in Table I, above, and in all of the tables below, were quantities are specified, denotes the quantity of "active" material.

### Example 3

The copolymer set retarding additive prepared as described in Example 1 was tested to determine if it causes gelation; it was compared with a prior art set retarder comprised of a copolymer of acrylic acid and 2-acrylamido-2-methylpropane sulphonic acid. The prior art copolymer and its use as a set retarding additive are described in United States Patent No. 4,941,536 issued March 5, 1991.

The two set retarding additives tested were added to samples of the base slurry described in Example 2 in varying amounts. The gelation tests consisted of API thickening time tests at 200°F (93°C) and 250°F (121°C) in which the viscosities of the test cement compositions were determined initially and at 25%, 50% and 75% of the total times prior to thickening. The results of these tests are given in Table II below.

**TABLE II**

| Gelation of Set Retarded Cement Compositions | | | | | | | |
|---|---|---|---|---|---|---|---|
| Set Retarding additive in Cement Composition¹ | Amount, % by weight of Dry Cement | Thickening Time, hr:min | | Initial viscosity cp (Pa s) | Viscosity at 25% of Thickening Time, cp (Pa s) | Viscosity at 50% of Thickening Time, cp (Pa s) | Viscosity at 75% of thickening Time, cp (Pa s) |
| | | 200°F (93°C) | 250°F (121°C) | | | | |
| Copolymer of this invention | 0.3 | 4:55 | - | 10 (10x10⁻³) | 10 (10x10⁻³) | 10 (10x10⁻³) | 11 (11x10⁻³) |
| | | | | | | | |
| Prior Art Retarder | 0.3 | 2:55 | - | 9 (9 x 10⁻³) | 30 (30 x 10⁻³) | 32 (32 x 10⁻³) | 36 (36 x 10⁻³) |
| | | | | | | | |
| Copolymer of this Invention | 0.5 | 10:39 | - | 8 (8 x 10⁻³) | 6 (6 x 10⁻³) | 5 (5 x 10⁻³) | 6 (6 x 10⁻³) |
| | | | | | | | |
| Prior Art Retarder | 0.5 | 4:45 | - | 14 (14 x10⁻³) | 25 (25 x 10⁻³) | 46 (46 x 10⁻³) | 52 (52 x 10⁻³) |
| | | | | | | | |
| Copolymer of this Invention | 0.75 | - | 4:50 | 16 (16 x 10⁻³) | 17 (17 x 10⁻³) | 17 (17x10⁻³) | 17 (17 x 10⁻³) |
| | | | | | | | |
| Prior Art Retarder | 0.75 | - | 3:10 | 22 (22 x 10⁻³) | 18 (18x 10⁻³) | 38 (38 x 10⁻³) | 55 (55x 10⁻³) |

| | | | | | | | |
|---|---|---|---|---|---|---|---|
| ¹ Cement composition was Lonestar Class H cement, 38% water by weight of dry cement and set retarding additive (16.4 lb/gal) (1965 kg/m³). Silica flour was included in the test compositions in the tests over 200°F (93°C) in amounts of 35% by weight of dry cement. | | | | | | | |

From Table II it can be seen that the prior art set retarder causes gelation since the viscosity values increase during the time prior to thickening. The polymer set retarding additive of this invention, on the other hand, does not cause gelation as shown by the viscosity readings remaining constant during the time prior to thickening. Further, the results set forth in Table II show that the copolymer set retarding additive of this invention produced considerably longer pump times than were obtained with the same amount of prior art additive.

As mentioned, the set retarding additive of this invention produced no gelation, i.e. the viscosities remained relatively constant, and the cement compositions containing the additive of this invention had right angle sets. The term "right angle set" is used herein to mean that the slurry goes directly from a relatively low viscosity slurry to a set cement having compressive strength without experiencing a substantial viscosity increase prior to set.

### Example 4

The set retarding additive prepared in accordance with Example 1 was added in various quantities to the base cement slurry described in Example 2 along with small quantities of a suspending agent. The resulting cement composition samples were tested for 24 hour compressive strengths at various temperatures in accordance with API Specification 10. The prior art set retarding additive described in Example 3 was also tested in the same manner as the set retarding additive of the present invention. The results of these tests are set forth in Table III below.

**TABLE III**

| Compressive Strengths of Set Retarded Cement Compositions | | | | | | |
|---|---|---|---|---|---|---|
| Set Retarding Additive in Cement Composition¹ | Amount, % by weight of Dry Cement | Compressive Strengths, psi (Pa) | | | | |
| | | 170°F (77°C) | 200°F (93°C) | 250°F (107°C) | 225°F (121°C) | 300°F (149°C) |
| Copolymer of this Invention | 0.3 | 3180 (219-220x10⁵Pa) | 3780 (260-261x10⁵Pa) | -- | - | - |
| | | | | | | |
| Prior Art Retarder | 0.3 | - | 3730 (257-258x10⁵Pa) | - | - | - |
| | | | | | | |
| Copolymer of this invention | 0.5 | - | - | - | 3142 216-217x10⁵Pa) | - |
| | | | | | | |
| Prior Art Retarder | 0.5 | - | - | 4580 (315-316x10⁵Pa) | - | - |
| | | | | | | |
| Copolymer of this Invention | 1.5 | - | - | - | - | 2470 (170-171x10⁵Pa) |
| | | | | | | |
| Prior Art Retarder | 1.5 | - | - | - | 5130 (353-354x10⁵Pa) | 2370 (163-164x10⁵Pa) |

| | | | | | | |
|---|---|---|---|---|---|---|
| ¹ Cement composition was Lonestar Class H cement, 38% water by weight of dry cement, borate treated hydroxypropylguar in an amount of 0.1% by weight of dry cement and set retarding additive (16.4 lb/gal) (1965 kg/m³⁾. Silica flour was included in the test compositions in the tests over 200°F (93°C) in an amount of 35% by weight of dry cement. | | | | | | |

As can be seen from Table III, the compressive strengths of the cement compositions of this invention are excellent and are in the same range as those achieved by the cement compositions containing the prior art set retarding additive.

### Example 5

A terpolymer set retarding additive of the present invention was prepared as follows. 3.4 grams of itaconic acid, 16.6 grams of 2-acrylamido-2-methylpropane sulfonic acid and I gram of maleic anhydride were dissolved in 60 grams of deionized water. The solution was deaerated with nitrogen and placed in a water bath maintained at 60°C. The nitrogen was bubbled through the solution (reaction mixture) for at least 30 minutes followed by the addition to the reaction mixture of 0.4 gram of sodium persulfate and 0.7 milliliter of tetraethylenepentamine. The reaction was allowed to proceed for 4 hours to produce an aqueous reaction solution believed to contain about 25.9% by weight terpolymer product. The terpolymer product was comprised of monomer units formed from itaconic acid, 2-acrylamido-2-methylpropane sulfonic acid and maleic acid in a mole ratio, respectively, of 24.5 to 67.0 to 8.5.

### Example 6

Various quantities of the terpolymer set retarding additive produced as described in Example 5 above (a 25.9% by weight aqueous solution of the terpolymer) were added to test samples of a base cement slurry. The base cement slurry was comprised of Lonestar Class H cement, silica flour in an amount of 35% by weight of dry cement and water in an amount of 38% by weight of dry cement. The base slurry had a density of 17.2 pounds per gallon (2061 kg/m³).

The test cement composition samples containing various quantities of the terpolymer set retarding additive were tested for thickening times at various temperatures in accordance with the standard API thickening time testing procedures set forth in API Specification 10. The results of these tests are given in Table IV below.

**TABLE IV**

| Thickening Times of Set Retarded Cement Compositions | | | | | | | |
|---|---|---|---|---|---|---|---|
| Amount of Set Retarding Additive in CementComposition¹, % by Weight of Dry Cement | Thickening Times, hr:min | | | | | | |
| | 200°F (93°C) | 250°F (121°C) | 300°F (149°C) | 350°F (177°C) | 400°F (204°C) | 450°F (232°C) | 500°F (260°C) |
| 0.3 | 7:48 | 2:45 | - | - | - | - | - |
| 0.5 | - | 5:35 | 2:20 | - | - | - | - |
| 0.75 | - | 7:24 | 3:32 | - | - | - | - |
| 0.9 | - | - | 4:22 | 1:52 | - | - | - |
| 1.3 | - | - | - | 4:20 | - | - | - |
| 1.5 | - | - | - | - | 1:53 | - | - |
| 2.2 | - | - | - | - | 3:16 | - | - |
| 2.5 | - | - | - | - | - | 4:04 | - |
| 3.3 | - | - | - | - | - | 7:30 | - |
| 4.0 | - | - | - | - | - | 9:00+ | 4:11 |

| | | | | | | | |
|---|---|---|---|---|---|---|---|
| ¹ Lonestar Class H cement, 35% silica flour by weight of dry cement, 38% water by weight of dry cement and set retarding additive (17.2 lb/gal) (2061 kg/m³). | | | | | | | |

From Table IV above it can be seen that the terpolymer formed from itaconic acid, 2-acrylamido-2-methylpropane sulfonic acid and maleic acid (maleic anhydride) is an excellent high temperature retarder which can be utilized in the temperature range of from 200°F (93°C) to 500°F (260°C) and above. In addition, no gelation was exhibited by any of the test composition samples tested for thickening time.

### Example 7

Various quantities of the terpolymer made in Example 5, were added to test samples of the base cement slurry described in Example 6 above. The samples containing the terpolymer were tested to detennine 24 hour compressive strengths at various temperatures in accordance with API Specification 10. The results of these tests are set forth in Table V below.

**TABLE V**

| Compressive strengths of set Retarded Cement Compositions | | | |
|---|---|---|---|
| Set Retarding Additive in Cement composition¹ | Amount, % by Weight of Dry Cement | Compressive | Strengths, psi (Pa) |
| | | 300°F (149°C) | 350°F (177°C) |
| Terpolymer of this invention | 0.5 | 2580 (177-178x10⁵Pa) | 3920 (270-271x10⁵Pa) |
| | | | |
| Terpolymer of this invention | 0.75 | 2830 (195-196x10⁵Pa) | 3360 (231-232x10⁵Pa) |

| | | | |
|---|---|---|---|
| ¹ Cement composition was Lonestar Class H cement, 35% silica flour by weight of dry cement, 38% water by weight of dry cement and set retarding additive (17.2lb/gal) (2061 kg/m³). | | | |

From Table V it can be seen that cement compositions containing the terpolymer set retarding additive have excellent compressive strength development at the test temperatures.

### Example 8

A copolymer set retarding additive was prepared as follows. 6 grams of itaconic acid and 14 grams of 2-acrylamido-2-methylpropane sulfonic acid (AMPS) were dissolved in 60 grams of deionized water. The mole ratio of AMPS to itaconic acid was 59.4 to 40.6. The solution was purged with nitrogen, placed in a 60°C water bath and 0.4 gram of sodium persulfate and 0.7ml of tetraethylenepentamine were added. The ensuing reaction was allowed to proceed for 4 hours to produce an aqueous reaction solution containing a copolymer product comprised of itaconic acid and 2-acrylamido-2-methylpropane sulfonic acid. The aqueous copolymer solution was added in various quantities to test samples of a base cement slurry containing small particle size cement. That is, the base slurry was comprised of a Portland hydraulic cement having a particle size not greater than about 30 microns and a Blaine Fineness no less than about 6,000 square centimeters per gram, a dispersant described in US-A-4,557,763 comprised of a polymeric additive prepared by the caustic-catalyzed condensation of formaldehyde, acetone and sodium sulfite in an amount of 1% by weight of dry cement and water in an amount of 100% by weight of dry cement. The base slurry had a density of 12.5 pounds per gallon (1498 kg/m³). The test cement composition samples were tested for thickening times at various temperatures in accordance with the procedure set forth in API Specification 10. The results of these tests are set forth in Table VI below.

**TABLE VI**

| Thickening Times of Set Retarded Small Particle Size Cement Compositions | | |
|---|---|---|
| Amount of Set Retarding Additive in Cement Composition¹, % by Weight of Dry Cement | Thickening Times hr:min | |
| | 140°F (60°C) | 187°F (86°C) |
| 0.5 | 1:04 | - |
| 1.0 | 17:14 | 3:10 |
| 1.25 | - | 6:10 |
| 1.5 | - | 7:02 |

| | | |
|---|---|---|
| ¹ Small Particle Size Portland Cement, 1% Sulfonated Acetone-Formaldehyde Condensate (US-A-4,557,763 ) by weight of dry cement, 100% water by weight of dry cement and set retarding additive (12.5 Ib/gal (1498 kg/m³). | | |

From Table VI it can be seen that the copolymer set retarding additive tested is an excellent set retarder in small particle size cement slurries.

### Example 9

A copolymer set retarding additive was prepared as follows. 5 grams of maleic anhydride and 10 grams of sodium methallyl sulfonate were dissolved in 50 grams of deionized water. The mixture was purged with nitrogen, placed in a 90°C water bath and 1 gram of potassium persulfate was added thereto. The reaction was allowed to proceed for 4 hours, to form a copolymer product containing maleic acid and methallyl sulfonate.

Various quantities of the above set retarding copolymer were added to test portions of the base cement slurry described in Example 2.

The test cement composition samples containing various quantities of the additive were tested for thickening times at various temperatures in accordance with API procedures. The results of these tests are set forth in Table VII below.

**Table VII**

| Thickening Times of Set Retarded Cement Compositions | | | | |
|---|---|---|---|---|
| Amount of Set Retarding Additive in Cement Composition¹, % by Weight of Dry Cement | Thickening Times², hr:min | | | |
| | 145°F (63°C) | 200°F (93°C) | 250°F (121°C) | 300°F (149°C) |
| 0.2 | 3:12 | 2:37 | - | - |
| 0.3 | 4:33 | 4:22 | - | - |
| 0.5 | 9:35 | 6:08 | - | - |
| 1.0 | - | - | 3:25 | - |
| 2.5 | - | - | - | 2:03 |

| | | | | |
|---|---|---|---|---|
| ¹ Lonestar Class H Cement, 38% water by weight of dry cement and set retarding additive (16.4 lb/gal) (1965 kg/m³). Silica flour was included in the test compositions in tests over 200°F (93°C) in amounts of 35% weight of dry cement. | | | | |
| ² No gelation took place during tests. | | | | |

A copolymer formed from itaconic acid and sodium methallyl sulfonate was also prepared having the same mole ratio and concentration in an aqueous solution as the above described copolymer formed from maleic acid and sodium methallyl sulfonate. The itaconic acid-sodium methallyl sulfonate copolymer was tested for thickening time at 200°F (93°C) in a sample of the same cement slurry as described above at a concentration of 0.5% by weight of dry cement. The thickening time was 4 hrs 13 min.

The above test results show that the polymer set retarding additives tested produce predictable thickening times without gelation.

### Example 10

The maleic acid terpolymer cement retarding additives described in Table VIII below were synthesized as follows. 1.5 grams of maleic anhydride, 3.5 grams of 2-acrylamido-2-methylpropane sulfonic acid and 1 gram of the third compound were dissolved in 50 grams of deionized water. The mixture solution was purged with nitrogen, placed in a 60°C water bath and 0.1 gram of sodium persulfate and 0.1 ml of tetraethylenepentamine were added thereto. The reaction mixture was reacted for 4 hours which produced an aqueous solution of the reaction product of maleic acid, 2-acrylamido-2-methylpropane sulfonic acid and the third compound utilized.

The itaconic acid terpolymers described in Table VIII were produced by adding 0.8 gram of itaconic acid, 4.2 grams of 2-acrylamido-2-methylpropane sulfonic acid and 1 gram of the third compound to 50 grams of deionized water. The mixture was purged with nitrogen, placed in a 60°C water bath and 0.1 gram of sodium persulfate and 0.2 ml of tetraethylenepentamine were added thereto. The reaction mixture was reacted for 4 hours which produced an aqueous solution of the reaction product of itaconic acid, 2-acrylamido-2-methylpropane sulfonic acid and the third compound.

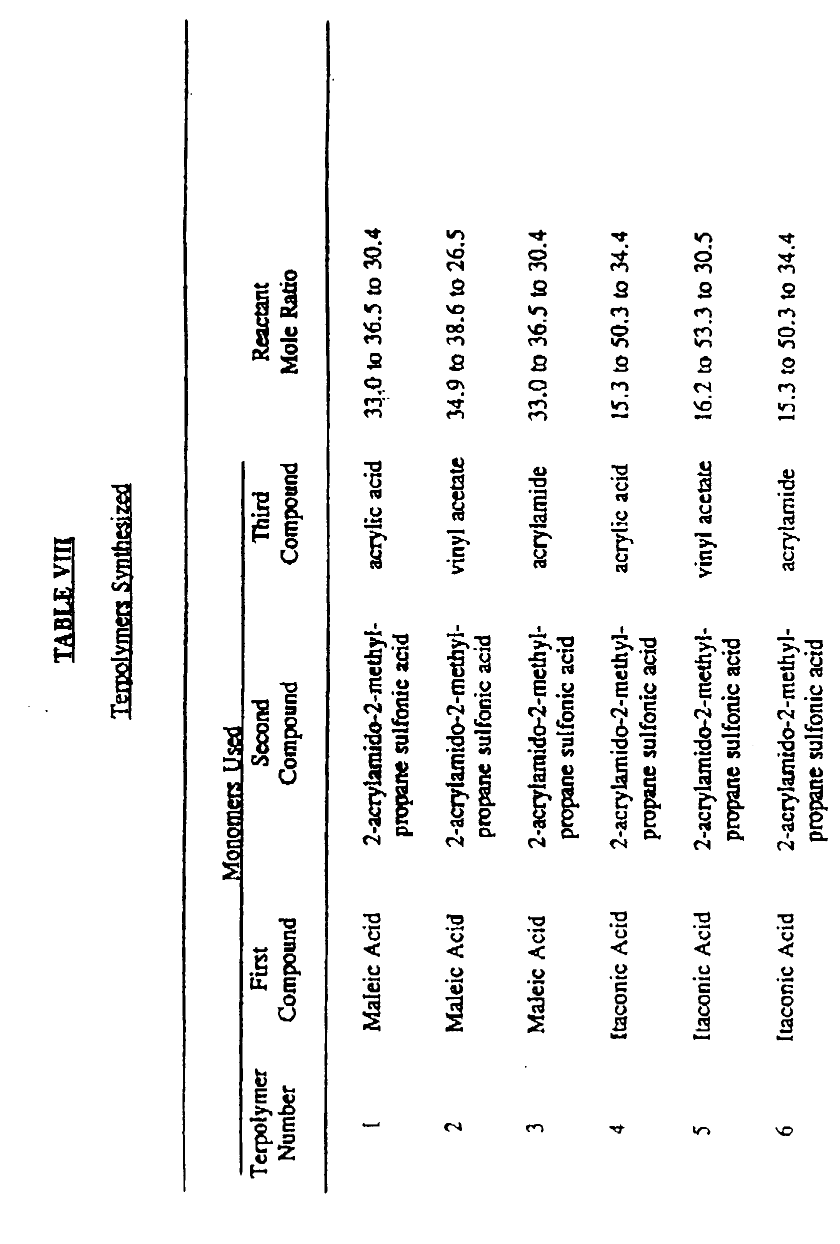

Various quantities of the above terpolymer set retarding additives were added to test samples of the base cement slurry described in Example 6, and the test cement compositions produced were tested for thickening times in accordance with the API testing procedure. The results of these tests are set forth in Table IX below.

**Table IX**

| Thickening Times of Set Retarded Cement Compositions | | | |
|---|---|---|---|
| Terpolymer Number | Amount of Set Retarding Additive in Cement Composition¹ % by Weight of Dry Cement | Thickening Times², hr:min | |
| | | 200°F (93°C) | 250°F (121°C) |
| 1 | 0.4 | 8:50 | - |
| 2 | 0.4 | 5:35 | - |
| 3 | 0.5 | 6:16 | - |
| 4 | 0.5 | - | 5 :35 |
| 5 | 0.5 | - | 2:24 |
| 6 | 0.5 | - | 3:38 |

| | | | |
|---|---|---|---|
| ¹ Lonestar Class H cement, 38% water by weight of dry cement and set retarding additive (17.2 lb/gal) (2051 kg/m³). 35% silica flour by weight of dry cement was added to the cement compositions tested at 250°F (121°C). | | | |
| ² No gelation took place during tests. | | | |

The above test results show that the set retarding additives of this invention produce excellent thickening times in small quantities without gelation.

Thus, the present invention is well adapted to carry out the objects and attain the ends and advantages mentioned as well as those which are inherent therein. While numerous changes may be made by those skilled in the art, such changes are encompassed within the invention as defined by the appended claims.

## Claims

1. Use of an additive for retarding the set of a hydraulic cement composition, wherein said additive comprises a polymer, which is either a copolymer or a terpolymer;
wherein said copolymer comprises monomer units formed from a first monomer-forming compound and a second monomer-forming compound, wherein said first and second monomer-forming compounds are different and are present in said polymer in amounts of from 5 to 50 and 95 to 50 mole percent of said polymer respectively, and wherein said first monomer-forming compound is a compound of the structural formula 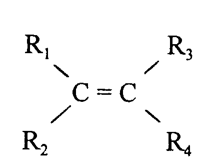
wherein R₁ is H or CH₃; R₂ is H or COOH; R₃ is H or COOH; and R₄ is H, COOH or CH₂COOH; provided that when R₁ is H and R₂ is COOH, R₃ and R₄ are different and are either H or COOH; when R₁ and R₂ are both H, R₃ is COOH and R₄ is CH₂COOH; and when R₁ is CH₃, R₂ is COOH and R₃ and R₄ are different and are either H or COOH; and
said second monomer forming compound is 2-acrylamido-2-methylpropane sulfonic acid, sodium methallyl sulfonate, sodium p-vinyl benzene sulfonate, acrylamide, N,N-dimethylacrylamide, vinyl sulfonic acid, acrylonitrile, 1-vinyl-2-pyrrolidone, vinyl phosphonic acid, diallyldimethylammonium chloride, diethylaminoethyl methacrylate, dimethylaminoethyl acrylate methyl chloride, methacrylamido propyltrimethyl ammonium chloride, N,N-dimethylaminoethyl methacrylate, or 2-triethylammoniummethyl methacrylate chloride; wherein said terpolymer comprises monomer units formed from a first monomer-forming compound, a second monomer-forming compound and a third monomer-forming compound, wherein said first monomer-forming compound is present in said polymer in amounts of from 5 to 50 mole percent of said polymer and is as defined above, said second monomer-forming compound is present in said polymer in amounts of from 90 to 45 mole percent of said polymer and is as defined above, and said third monomer-forming compound is present in said polymer in amounts of from 5 to 50 mole percent of said polymer and is maleic acid, acrylic acid or any of said second monomer-forming compounds.

2. Use according to claim 1, with the proviso that when said second monomer forming compound of said copolymer is 2-acrylamido-2-methylpropane sulfonic acid, said first monomer-forming compound is not itaconic acid.

3. Use according to claim 1, wherein said second monomer-forming compound of said terpolymer is selected from 2-acrylamido-2-methylpropane sulfonic acid and sodium methallyl sulfonate, and said third monomer-forming compound is selected from acrylic acid and maleic acid when the first monomer-forming compound is not maleic acid.

4. Use according to any of claims 1 to 3, wherein said second monomer-forming compound is 2-acrylamido-2-methylpropane sulfonic acid.

5. Use according to any of claims 1 to 4, wherein said first monomer-forming compound is maleic acid or itaconic acid.

6. Use according to any of claims 1 to 5, wherein said additive comprises a terpolymer, wherein said first monomer-forming compound is maleic acid, said second monomer-forming compound is 2-acrylamido-2-methylpropane sulfonic acid, and said third monomer-forming compound is acrylic acid.

7. Use according to any of claims 1 to 5, wherein said additive comprises a terpolymer, wherein said first monomer-forming compound is itaconic acid, said second monomer-forming compound is 2-acrylamido-2-methylpropane sulfonic acid, and said third monomer-forming compound is maleic acid.

8. An additive for retarding the set of a hydraulic cement composition, said additive comprising a polymer which is either a copolymer or a terpolymer;
wherein said copolymer comprises monomer units formed from a first monomer-forming compound and a second monomer-forming compound, wherein said first and second monomer-forming compounds are different and are present in said polymer in amounts of from 5 to 50 and 95 to 50 mole percent of said polymer respectively, and wherein said first monomer-forming compound is a compound of the structural formula 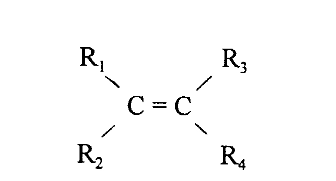
wherein R₁ is H or CH₃; R₂ is H or COOH; R₃ is H or COOH; and R₄ is H, COOH or CH₂COOH; provided that when R₁ is H and R₂ is COOH, R₃ and R₄ are different and are either H or COOH; when R₁ and R₂ are both H, R₃ is COOH and R₄ is CH₂COOH; and when R₁ is CH₃, R₂ is COOH and R₃ and R₄ are different and are either H or COOH; and
said second monomer forming compound is 2-acrylamido-2-methylpropane sulfonic acid, sodium methallyl sulfonate, sodium p-vinyl benzene sulfonate, acrylamide, N,N-dimethylacrylamide, vinyl sulfonic acid, acrylonitrile, 1-vinyl-2-pyrrolidone, vinyl phosphonic acid, diallyldimethylammonium chloride, diethylaminoethyl methacrylate, dimethylaminoethyl acrylate methyl chloride, methacrylamido propyltrimethyl ammonium chloride, N,N-dimethylaminoethyl methacrylate, or 2-triethylammoniummethyl methacrylate chloride;
wherein said terpolymer comprises monomer units formed from a first monomer-forming compound, a second monomer-forming compound and a third monomer-forming compound, wherein said first monomer-forming compound is present in said polymer in amounts of from 5 to 50 mole percent of said polymer and is as defined above, said second monomer-forming compound is present in said polymer in amounts of from 90 to 45 mole percent of said polymer and is selected from 2-acrylamido-2-methylpropane sulfonic acid and sodium methallyl sulfonate, and said third monomer-forming compound is present in said polymer in amounts of from 5 to 50 mole percent of said polymer and is selected from acrylic acid and maleic acid when the first monomer-forming compound is not maleic acid;
with the proviso that when said second monomer forming compound of said copolymer is 2-acrylamido-2-methylpropane sulfonic acid, said first monomer-forming compound is not itaconic acid.

9. An additive according to claim 8, wherein said second monomer-forming compound is 2-acrylamido-2-methylpropane sulfonic acid.

10. An additive according to claim 8 or 9, wherein said first monomer-forming compound is maleic acid or itaconic acid.

11. An additive according to any of claims 8 to 10, wherein said additive comprises a terpolymer, wherein said first monomer-forming compound is maleic acid, said second monomer-forming compound is 2-acrylamido-2-methylpropane sulfonic acid, and said third monomer-forming compound is acrylic acid.

12. An additive according to any of claims 8 to 10, wherein said additive comprises a terpolymer, wherein said first monomer-forming compound is itaconic acid, said second monomer-forming compound is 2-acrylamido-2-methylpropane sulfonic acid, and said third monomer-forming compound is maleic acid.

13. A set retarded hydraulic cement composition, which comprises hydraulic cement; water to form a slurry; and an additive as claimed in any of claims 8 to 12.

14. A method of cementing a subterranean zone penetrated by a well bore, which method comprises pumping a cement composition as claimed in claim 13 into said zone by way of said well bore; and allowing said cement composition to set.

## Patentansprüche

1. Verwendung eines Zusatzmittels zur Verzögerung des Abbindens einer hydraulischen Zementzusammensetzung, wobei das Zusatzmittel ein Polymer umfaßt, bei dem es sich entweder um ein Copolymer oder ein Terpolymer handelt;
wobei das Copolymer Monomereinheiten umfaßt, die aus einer ersten monomerbildenden Verbindung und einer zweiten monomerbildenden Verbindung gebildet werden, wobei die ersten und zweiten monomerbildenden Verbindungen verschieden sind und in dem Polymer jeweils in Mengen von 5 bis 50 bzw. 95 bis 50 Molprozent des Polymers vorliegen und wobei die erste monomerbildende Verbindung eine Verbindung mit der Strukturformel 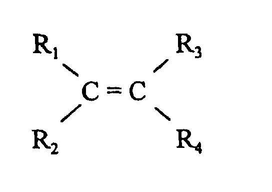
darstellt, in der R₁ für H oder CH₃ steht; R₂ für H oder COOH steht; R₃ für H oder COOH steht und R₄ für H, COOH oder CH₂COOH steht; unter folgender Voraussetzung: wenn R₁ für H und R₂ für COOH stehen, so sind R₃ und R₄ verschieden und stehen entweder für H oder für COOH; wenn sowohl R₁ als auch R₂ für H stehen, so steht R₃ für COOH und R₄ steht für CH₂COOH; und wenn R₁ für CH₃ steht, so steht R₂ für COOH und R₃ und R₄ sind verschieden und stehen entweder für H oder für COOH; und
die zweite monomerbildende Verbindung stellt 2-Acrylamid-2-methylpropansulfonsäure, Natriummethallylsulfonat, Natrium-p-vinylbenzolsulfonat, Acrylamid, N,N-Dimethylacrylamid, Vinylsulfonsäure, Acrylnitril, 1-Vinyl-2-pyrrolidon, Vinylphosphonsäure, Diallyldimethylammoniumchlorid, Diethylaminethylmethacrylat, Dimethylaminethylacrylatmethylchlorid, Methacrylamidpropyl-Trimethylammoniumchlorid, N,N-Dimethylaminethylmethacrylat oder 2-Triethylammoniummethyl-Methacrylatchlorid dar; wobei das Terpolymer Monomereinheiten umfaßt, die aus einer ersten monomerbildenden Verbindung, einer zweiten monomerbildenden Verbindung und einer dritten monomerbildenden Verbindung gebildet werden, wobei die erste monomerbildende Verbindung in dem Polymer in Mengen von 5 bis 50 Molprozent des Polymers und wie oben definiert vorliegt, die zweite monomerbildende Verbindung in dem Polymer in Mengen von 90 bis 45 Molprozent des Polymers und wie oben definiert vorliegt und die dritte monomerbildende Verbindung in dem Polymer in Mengen von 5 bis 50 Molprozent des Polymers vorliegt und Maleinsäure, Acrylsäure oder irgend eine der zweiten monomerbildenden Verbindungen darstellt.

2. Verwendung nach Anspruch 1, unter der Voraussetzung, daß es sich bei der ersten monomerbildenden Verbindung - wenn die zweite monomerbildende Verbindung des Copolymers 2-Acrylamid-2-methylpropansulfonsäure darstellt - nicht um Itaconsäure handelt.

3. Verwendung nach Anspruch 1, wobei die zweite monomerbildende Verbindung des Terpolymers unter 2-Acrylamid-2-methylpropansulfonsäure und Natriummethallylsulfonat ausgewählt und die dritte monomerbildende Verbindung unter Acrylsäure und Maleinsäure ausgewählt wird, wenn es sich bei der ersten monomerbildenden Verbindung nicht um Maleinsäure handelt.

4. Verwendung nach einem der Ansprüche 1 bis 3, wobei es sich bei der zweiten monomerbildenden Verbindung um 2-Acrylamid-2-methylpropansulfonsäure handelt.

5. Verwendung nach einem der Ansprüche 1 bis 4, wobei es sich bei der ersten monomerbildenden Verbindung um Maleinsäure oder Itaconsäure handelt.

6. Verwendung nach einem der Ansprüche 1 bis 5, wobei das Zusatzmittel ein Terpolymer umfaßt, wobei es sich bei der ersten monomerbildenden Verbindung um Maleinsäure, bei der zweiten monomerbildenden Verbindung um 2-Acrylamid-2-methylpropansulfonsäure und bei der dritten monomerbildenden Verbindung um Acrylsäure handelt.

7. Verwendung nach einem der Ansprüche 1 bis 5, wobei das Zusatzmittel ein Terpolymer umfaßt, wobei es sich bei der ersten monomerbildenden Verbindung um Itaconsäure, bei der zweiten monomerbildenden Verbindung um 2-Acrylamid-2-methylpropansulfonsäure und bei der dritten monomerbildenden Verbindung um Maleinsäure handelt.

8. Zusatzmittel zur Verzögerung des Abbindens einer hydraulischen Zementzusammensetzung, wobei das Zusatzmittel ein Polymer umfaßt, bei dem es sich entweder um ein Copolymer oder ein Terpolymer handelt;
wobei das Copolymer Monomereinheiten umfaßt, die aus einer ersten monomerbildenden Verbindung und einer zweiten monomerbildenden Verbindung gebildet werden, wobei die ersten und zweiten monomerbildenden Verbindungen verschieden sind und in dem Polymer jeweils in Mengen von 5 bis 50 bzw. 95 bis 50 Molprozent des Polymers vorliegen und wobei die erste monomerbildende Verbindung eine Verbindung mit der Strukturformel 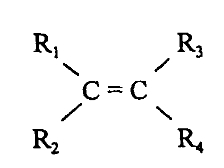
darstellt, in der R₁ für H oder CH₃ steht; R₂ für H oder COOH steht; R₃ für H oder COOH steht und R₄ für H, COOH oder CH₂COOH steht; unter folgender Voraussetzung: wenn R₁ für H und R₂ für COOH stehen, so sind R₃ und R₄ verschieden und stehen entweder für H oder für COOH; wenn sowohl R₁ als auch R₂ für H stehen, so steht R₃ für COOH und R₄ steht für CH₂COOH; und wenn R₁ für CH₃ steht, so steht R₂ für COOH und R₃ und R₄ sind verschieden und stehen entweder für H oder für COOH; und
die zweite monomerbildende Verbindung stellt 2-Acrylamid-2-methylpropansulfonsäure, Natriummethallylsulfonat, Natrium-p-vinylbenzolsulfonat, Acrylamid, N,N-Dimethylacrylamid, Vinylsulfonsäure, Acrylnitril, 1 -Vinyl-2-pyrrolidon, Vinylphosphonsäure, Diallyldimethylammoniumchlorid, Diethylaminethylmethacrylat, Dimethylaminethylacrylatmethylchlorid, Methacrylamidpropyltrimethylammonium-chlorid, N,N-Dimethylaminethylmethacrylat oder 2-Triethylammoniummethyl- Methacrylatchlorid dar,
wobei das Terpolymer Monomereinheiten umfaßt, die aus einer ersten monomerbildenden Verbindung, einer zweiten monomerbildenden Verbindung und einer dritten monomerbildenden Verbindung gebildet werden, wobei die erste monomerbildende Verbindung in dem Polymer in Mengen von 5 bis 50 Molprozent des Polymers und wie oben definiert vorliegt, die zweite monomerbildende Verbindung in dem Polymer in Mengen von 90 bis 45 Molprozent des Polymers vorliegt und unter 2-Acrylamid-2-methylpropansulfonsäure und Natriummethallylsulfonat ausgewählt wird und die dritte monomerbildende Verbindung in dem Polymer in Mengen von 5 bis 50 Molprozent des Polymers vorliegt und unter Acrylsäure und Maleinsäure ausgewählt wird, wenn es sich bei der monomerbildende Verbindung nicht um Maleinsäure handelt,
vorausgesetzt, daß es sich bei der ersten monomerbildenden Verbindung - wenn die zweite monomerbildende Verbindung des Copolymers 2-Acrylamid-2-methylpropansulfonsäure darstellt - nicht um Itaconsäure handelt.

9. Zusatzmittel nach Anspruch 8, wobei es sich bei der zweiten monomerbildenden Verbindung um 2-Acrylamid-2-methylpropansulfonsäure handelt.

10. Zusatzmittel nach Anspruch 8 oder 9, wobei es sich bei der ersten monomerbildenden Verbindung um Maleinsäure oder Itaconsäure handelt.

11. Zusatzmittel nach einem der Ansprüche 8 bis 10, wobei das Zusatzmittel ein Terpolymer umfaßt, wobei es sich bei der ersten monomerbildenden Verbindung um Maleinsäure, bei der zweiten monomerbildenden Verbindung um 2-Acrylamid-2-methylpropansulfonsäure und bei der dritten monomerbildenden Verbindung um Acrylsäure handelt.

12. Zusatzmittel nach einem der Ansprüche 8 bis 10, wobei das Zusatzmittel ein Terpolymer umfaßt, wobei es sich bei der ersten monomerbildenden Verbindung um Itaconsäure, bei der zweiten monomerbildenden Verbindung um 2-Acrylamid-2-methylpropansulfonsäure und bei der dritten monomerbildenden Verbindung um Maleinsäure handelt.

13. Hydraulische Zementzusammensetzung verzögerter Abbindung, die hydraulischen Zement, Wasser zur Bildung einer Aufschlämmung und ein in einem der Ansprüche 8 bis 12 beanspruchtes Zusatzmittel umfaßt.

14. Methode zum Zementieren einer unterirdischen, von einem Bohrloch durchdrungenen Zone, welche Methode folgendes umfaßt: Pumpen einer in Anspruch 13 beanspruchten Zementzusammensetzung durch das Bohrloch in die Zone und Abbindenlassen der Zementzusammensetzung.

## Revendications

1. Utilisation d'un additif pour retarder la prise d'une composition de ciment hydraulique, dans lequel ledit additif comporte un polymère, qui est soit un copolymère, soit un terpolymère ;
dans laquelle ledit copolymère comporte des unités monomères formées à partir d'une première composition formatrice de monomère et d'une seconde composition formatrice de monomère, dans laquelle lesdites première et seconde compositions formatrices de monomère sont différentes et sont respectivement présentes dans ledit polymère en quantités de 5 à 50 et 95 à 50 moles pour cent dudit polymère, et dans laquelle la première composition formatrice de monomère est une composition ayant la formule structurale : 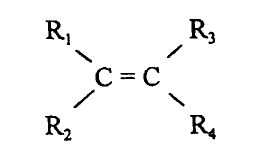
dans laquelle R₁ est H ou CH₃ ; R₂ est H ou COOH ; R₃ est H ou COOH ; et R₄ est H COOH ou CH₂COOH ; à condition que, lorsque R₁ est H et R₂ est COOH, R₃ et R₄ soient différents et soient H ou COOH ; lorsque R₁ et R₂ sont tous deux H, R₃ est COOH et R₄ est CH₂COOH ; et lorsque R₁ est CH₃, R₂ est COOH et R₃ et R₄ sont différents et sont H ou COOH ; et
ladite seconde composition formatrice de monomère est l'acide sulfonique 2-acrylamido-2-propane, le sulfonate de sodium méthallylique, le parastyrènesulfonate de sodium, l'acrylamide, le N,N-diméthylacrylamide, l'acide vinyl sulfonique, l'acrylonitrile, le 1-vinyl-2-pyrrolidone, l'acide vinyl phosphonique, le chlorure de diallyldiméthylammonium, le méthacrylate de diéthylaminoéthyle, le chlorure méthylique d'acrylate diméthylaminoéthyle, le chlorure d'ammonium méthacrylamidopropyltriméthylique, le méthacrylate de N,N-diméthylaminoéthyle, ou le chlorure de méthacrylate 2-triéthylammoniumméthyle ; dans lequel ledit terpolymère comporte des unités monomères formées à partir d'une première composition formatrice de monomère, d'une seconde composition formatrice de monomère et d'une troisième composition formatrice de monomère, dans lequel ladite première composition formatrice de monomère est présente dans ledit polymère en des quantités de 5 à 50 moles pour cent dudit polymère et est telle que définie ci-dessus, ladite seconde composition formatrice de monomère est présente dans ledit polymère en des quantités de 90 à 45 moles pour cent dudit polymère et est telle que définie ci-dessus, et la troisième composition formatrice de monomère est présente dans ledit polymère en des quantités de 5 à 50 moles pour cent dudit polymère et est l'acide maléique, l'acide acrylique ou l'une quelconque desdites secondes compositions formatrices de monomère.

2. Utilisation selon la revendication 1 à condition que, lorsque ladite seconde composition formatrice de monomère dudit copolymère est l'acide sulfonique 2-acrylamido-2-méthylpropane, ladite première composition formatrice de monomère ne soit pas l'acide itaconique.

3. Utilisation selon la revendication 1, selon laquelle ladite seconde composition formatrice de monomère dudit terpolymère est sélectionnée parmi l'acide sulfonique 2-acrylamido-2-méthylpropane et le sulfonate de sodium méthallylique, et ladite troisième composition formatrice de monomère est sélectionnée parmi l'acide acrylique et l'acide maléique lorsque la première composition formatrice de monomère n'est pas l'acide maléique.

4. Utilisation selon l'une quelconque des revendications 1 à 3, selon laquelle ladite seconde composition formatrice de monomère est l'acide sulfonique 2-acrylamido-2-méthylpropane.

5. Utilisation selon l'une quelconque des revendications 1 à 4, selon laquelle ladite première composition formatrice de monomère est l'acide maléique ou l'acide itaconique.

6. Utilisation selon l'une quelconque des revendications 1 à 5, selon laquelle ledit additif comporte un terpolymère, dans lequel ladite première composition formatrice de monomère est l'acide maléique, ladite seconde composition formatrice de monomère est l'acide sulfonique 2-acrylamido-2-méthylpropane, et ladite troisième composition formatrice de monomère est l'acide acrylique.

7. Utilisation selon l'une quelconque des revendications 1 à 5, selon lequel ledit additif comporte un terpolymère, dans lequel ladite première composition formatrice de monomère est l'acide itaconique, ladite seconde composition formatrice de monomère est l'acide sulfonique 2-acrylamido-2-méthylpropane, et ladite troisième composition formatrice de monomère est l'acide maléique.

8. Un additif pour retarder la prise d'une composition de ciment hydraulique, ledit additif comportant un polymère qui est soit un copolymère, soit un terpolymère ;
dans lequel ledit copolymère comporte des unités monomères formées à partir d'une première composition formatrice de monomère et d'une seconde composition formatrice de monomère, dans lequel lesdites première et seconde compositions formatrices de monomère sont différentes et sont respectivement présentes dans ledit polymère en quantités de 5 à 50 et 95 à 50 moles pour cent dudit polymère, et dans lequel ladite première composition formatrice de monomère est une composition ayant la formule structurale suivante : 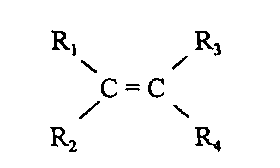
dans laquelle R₁ est H ou CH₃ ; R₂ est H ou COOH ; R₃ est H ou COOH ; et R₄ est H, COOH ou CH₂COOH ; à condition que, lorsque R₁ est H et R₂ est COOH, R₃ et R₄ sont différents et sont H ou COOH ; lorsque R₁ et R₂ sont tous deux H, R₃ est COOH et R₄ est CH₂COOH ; et lorsque R₁ est CH₃, R₂ est COOH et R₃ et R₄ sont différents et sont H ou COOH ; et
ladite seconde composition formatrice de monomère est l'acide sulfonique 2-acrylamido-2-méthylpropane, le sulfonate de sodium méthallylique, le parastyrènesulfonate de sodium, l'acrylamide, le N,N-diméthylacrylamide, l'acide vinylsulfonique, l'acrylonitrile, le 1-vinyl-2-pyrrolidone, l'acide vinylphosphonique, le chlorure de diallyldiméthylammonium, le méthacrylate de diéthylaminoéthyle, le chlorure méthylique d'acrylate diméthylaminoéthylique, le chlorure d'ammonium méthacrylamidopropyltriméthylique, le méthacrylate de N,N-diméthylaminoéthyle, ou le chlorure de méthacrylate 2-triéthylammoniumméthyle;
dans lequel ledit terpolymère comporte des unités monomères formées à partir d'une première composition formatrice de monomère, d'une seconde composition formatrice de monomère et d'une troisième composition formatrice de monomère, dans lequel ladite première composition formatrice de monomère est présente dans ledit polymère en des quantités de 5 à 50 moles pour cent dudit polymère et est telle que définie ci-dessus, ladite seconde composition formatrice de monomère est présente dans ledit polymère en des quantités de 90 à 45 moles pour cent dudit polymère et est sélectionnée parmi l'acide sulfonique 2-acrylamido-2-méthylpropane et le sulfonate de sodium méthallylique, et la troisième composition formatrice de monomère est présente dans ledit polymère en des quantités de 5 à 50 moles pour cent dudit polymère et est sélectionnée parmi l'acide acrylique et l'acide maléique lorsque la première composition formatrice de monomère n'est pas l'acide maléique ;
à condition que, lorsque ladite seconde composition formatrice de monomère dudit copolymère est l'acide sulfonique 2-acrylamido-2-méthylpropane, ladite première composition formatrice de monomère ne soit pas l'acide itaconique.

9. Un additif selon la revendication 8, dans lequel ladite seconde composition formatrice de monomère est l'acide sulfonique 2-acrylamido-2-méthylpropane.

10. Un additif selon la revendication 8 ou 9, dans lequel ladite première composition formatrice de monomère est l'acide maléique ou l'acide itaconique.

11. Un additif selon l'une quelconque des revendications 8 à 10, dans lequel ledit additif comporte un terpolymère, dans lequel ladite première composition formatrice de polymère est l'acide maléique, ladite seconde composition formatrice de monomère est l'acide sulfonique 2-acrylamido-2-méthylpropane, et ladite troisième composition formatrice de monomère est l'acide acrylique.

12. Un additif selon l'une quelconque des revendications 8 à 10, dans lequel ledit additif comporte un terpolymère, dans lequel ladite première composition formatrice de monomère est l'acide itaconique, ladite seconde composition formatrice de monomère est l'acide sulfonique 2-acrylamido-2-méthylpropane, et ladite troisième composition formatrice de monomère est l'acide maléique.

13. Une composition de ciment hydraulique à retardement de prise, qui comporte du ciment hydraulique ; de l'eau pour former un coulis ; et un additif tel que revendiqué à l'une des revendications 8 à 12.

14. Un procédé de cimentation d'une zone souterraine traversée par un trou de sondage, ledit procédé comportant le pompage d'une composition de ciment selon la revendication 13 dans ladite zone par l'intermédiaire dudit trou de sondage ; et attente pour laisser prendre ladite composition de ciment.
